(19) Europäisches Patentamt / European Patent Office / Office européen des brevets

(11) **EP 4 123 133 B1**

(12) **EUROPEAN PATENT SPECIFICATION**

(45) Date of publication and mention of the grant of the patent:
**09.10.2024 Bulletin 2024/41**

(21) Application number: **21187182.7**

(22) Date of filing: **22.07.2021**

(51) International Patent Classification (IPC):
**F01N 3/20** $^{(2006.01)}$

(52) Cooperative Patent Classification (CPC):
**F01N 3/208;** F01N 2610/01; F01N 2610/02;
F01N 2610/144; F01N 2610/146; F01N 2900/0411;
Y02A 50/20; Y02T 10/12

(54) **METHOD FOR OPERATING A FLUID SUPPLY SYSTEM**

VERFAHREN ZUM BETRIEB EINES FLUIDVERSORGUNGSSYSTEMS

PROCÉDÉ DE FONCTIONNEMENT D'UN SYSTÈME D'ALIMENTATION EN FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.01.2023 Bulletin 2023/04**

(73) Proprietor: **Robert Bosch GmbH
70442 Stuttgart (DE)**

(72) Inventors:
- **Beneda, Martin
  37816 Lomnice and Luznici (CZ)**
- **Pelikan, Petr
  37004 Ceské Budejovice (CZ)**

(56) References cited:
**EP-A1- 2 860 368**

**Description**

The present invention relates to a method for operating a fluid supply system, and a processing unit and a computer program for its execution.

Background

In the after-treatment of exhaust gases in (motor) vehicles, the so-called SCR (Selective Catalytic Reduction) process can be used, in particular to reduce nitrogen oxides ($NO_x$). A urea-water solution is introduced into the typically oxygen-rich exhaust gas as a reducing agent solution. For this purpose, a dosing valve or dosing module can be used as a component of a fluid supply system, which includes a nozzle in order to spray or introduce the urea-water solution into the exhaust gas flow. Upstream of an SCR catalytic converter, the urea-water solution reacts to form ammonia, which then combines with the nitrogen oxides at the SCR catalytic converter, from which water and nitrogen are produced.

EP 2 860 368 A1 discloses systems and methods for determining or diagnosing a reagent dosing system failure to provide sufficient reagent to an exhaust aftertreatment system that includes an SCR catalyst to satisfy a reagent dosing command. The method comprises injecting a quantity of a reagent with a dosing system over a dosing cycle in response to a dosing command to treat an exhaust gas in an exhaust system that includes a selective catalytic reduction catalyst, wherein the dosing system includes a pump operating via feedback control to maintain a generally stable pressure of the reagent downstream of the pump during the dosing cycle, wherein injecting the quantity of the reagent includes: suspending pressure feedback control of the pump during a diagnostic dosing period within the dosing cycle while maintaining a pump speed; injecting a portion of the quantity of the reagent while suspending pressure feedback control during the diagnostic dosing period; and determining a fault condition of the dosing system in satisfying the dosing command in response to a pressure drop of the dosing system during the diagnostic dosing period.

Summary

According to the invention, a method for operating a fluid supply system, and a processing unit and a computer program for its execution with the features of the independent claims are proposed. Advantageous further developments form the subject matter of the dependent claims and of the subsequent description.

The present invention relates to supplying fluid like a urea-water solution into an exhaust gas system of an engine, in particular using and operating a corresponding fluid supply system. Such fluid supply system typically comprises a tank for the fluid, a pump or pumping means (typically a diaphragm pump, it may be part of a supply unit) and the dosing valve or module. In addition, corresponding fluid supply (pressure) lines between the individual components are provided. In addition, a return line is usually connected to the tank, via which excess fluid or urea-water solution can be returned. An orifice or throttle in the return line can be provided to control the return flow.

The so-called SCR technology, as mentioned above, is based on the reaction of $NH_3$ with $NO_x$ and is common in diesel powered vehicles. As $NH_3$ is a hazardous component, a precursor called Diesel Exhaust Fluid (DEF) is dosed into the exhaust gas system. DEF typically consists of a solution of 32.5% urea in water with a melting point of -11°C (the urea-water solution mentioned before). The urea-water solution is stored in the tank, pumped to the dosing valve or module and sprayed into the exhaust gas flow where it is evaporated and transformed into gaseous $NH_3$.

With the outlooks for upcoming emission limits, efficiency of the exhaust treatment systems should be increased. In SCR context, regardless of the exhaust technology complexity (single/double SCR), this situation leads to the requirement of a more accurate and timely delivery (dosing) of the required amounts (mass) of fluid like urea-water solution. Insufficient dosing accuracy may lead to unacceptable $NO_x$ or $NH_3$ slips (albeit occasionally under challenging/transient working conditions).

A way for operating such fluid supply system is based on so-called "actuator synchronization". In such operation method, there is a time shift between the actuation of dosing valve and actuation of the pump. The pump is actuated before (prior to) the dosing valve in order to reduce pressure oscillation. A dosing request, i.e., a desired mass or mass flow of fluid to be dosed into the exhaust gas system, is typically computed some time before the actual start of the corresponding dosing cycle. Up to now, any feedback from the previous dosing cycle is not taken into account during this calculation. This results in lower dosing precision.

In view of this background, the present invention proposes a way or a dosing strategy to overcome this low dosing precision, i.e., the dosing precision will be increased.

The method is based on operating said fluid supply system by a plurality of dosing cycles within a pre-determined dosing period, i.e., a dosing period of pre-determined length comprises a plurality of individual dosing cycles. A dosing cycle, in general, relates to actuating the pump and, preferably with a time delay, actuating the dosing valve. The purpose of such shift between pump and dosing valve actuation is to have better fluid (DEF) pressure stability. The pump is actuated earlier in order to compensate fluid pressure drop after opening the doing valve. This shift causes differences between desired and dosed fluid mass. The dosing period can be defined, for example, by a certain mass of fluid to be dosed into the exhaust gas system, for example a value between 0 g and 60 g of fluid or urea (which only is a specific percentage of the entire solution/fluid).

Each dosing cycle comprises several steps: A first step is determining a desired mass value of a mass of a fluid to be dosed into said exhaust gas system of the engine. This corresponds to a dosing request. Said desired mass value is determined based on a set mass value of an accumulated required mass of said fluid during a current dosing period, and on a dosed mass value of an accumulated mass of said fluid having been dosed into said exhaust gas system during said current dosing period up to and including the previous dosing cycle.

Such dosing request with the desired mass value, $m_{Des}$, can be determined and set at the time of feed-forward control calculation of the next pump actuation, which is typically some time before the start of the actual actuation during said dosing cycle. The set mass value, $m_{Set}$, reflects the fluid (DEF) dosing requirements from a dosing strategy and is an accumulated or integrated value, with the accumulation starting at the beginning of a dosing period. The dosed mass value, $m_{Dos}$, stands for an accumulated fluid dosed mass that was dosed by all previous dosing cycles during said current dosing period. This results in the desired mass value according to:

$$m_{Des} = m_{Set} - m_{Dos}$$

In case of overdosing, i.e., if the desired mass value, $m_{Des}$, is calculated to be negative, the dosing requirement is, preferably, limited or set to zero.

A further step is operating said fluid supply system in order to pump said fluid from said fluid tank to said fluid dosing valve and to dose said fluid, via said fluid dosing valve, into said exhaust gas system (according to the determined desired mass value). In addition, said dosed mass value is updated including the current dosing cycle by accumulating the dosed mass of fluid of the current dosing cycle and the dosed mass value of said accumulated mass of said fluid having been dosed into said exhaust gas system during said current dosing period up to and including said previous dosing cycle. This can account for differing of the resulting dosed mass may from the determined desired mass value, e.g. due to pressure fluctuation or the like. Thus, there is a new/updated dosed mass value for the next dosing cycle.

According to the invention, said fluid supply system is operated by a plurality of consecutive ones of said predetermined dosing periods; these dosing periods can sequentially be performed. In such case, there can be a specific way to go from the end of one dosing period to the start of the next one. In particular, for a first dosing cycle of a current dosing period, said desired mass value is determined based on a set mass value of an accumulated required mass of said fluid during said current dosing period (as also for other dosing cycles; however, this value is low as it is at the beginning of the dosing period); The dosed mass value to be used is that one accumulated during a previous dosing period up to and including a last dosing cycle of said previous dosing period; further, a reset mass value, $m_{Reset}$, defining said dosing periods is used, preferably, by subtraction from the dosed mass value. This results in:

$$m_{Des} = m_{Set} - (m_{Dos} - m_{Reset}) = m_{Set} - m_{Dos} + m_{Reset}$$

The advantage of such SCR function is to increase fluid (DEF) dosing accuracy by an enhanced mass flow interface. The updated interface (accumulated dosed mass) uses the amount of fluid dosed during previous dosing cycles for the calculation of the next dosing request (desired mass value). This request is calculated by subtraction of dosed amount from the dosing request.

The calculation of the desired dosing mass flow from mass requests is optimized and/or enhanced for systems utilizing feedforward control. The calculated/modelled dosed feedback is also taken into account in order to improve mid and/or long term accuracy.

The dosed mass value, $m_{Dos}$, is an auxiliary variable initialized with the set mass value, $m_{Set}$, at start of metering mode (first cycle at a start of the entire system). The calculation can be conditioned by ignition on (of the vehicle). Further, the valve availability can to be considered for setting/resetting a flag for releasing the calculation.

The new (updated) dosed mass value, $m_{Dos}$, can be calculated at the beginning of the dosing valve actuation, based on a calculated dosing valve duty cycle and period (the parameters of operating the dosing valve), corrected with a quantity factor if necessary for matching the physical units. With dosed mass flow $mf_{Dos}$ (a valve specific parameter) and dosing valve period (period during which the valve is open) DosVlvPer (set for the individual dosing cycle) this results in:

$$m_{Dos}[g] = m_{Dos-1}[g] + mf_{Dos}[mg/s] * DosVlvPer[ms] * 10^{-6}$$

Physical units are given in brackets, index "-1" refers to the previous dosing cycle. Right after the integrator reset, the calculation is then:

$$m_{Dos}[g] = m_{Dos-1}[g] - m_{Reset} + mf_{Dos}[mg/s] * DosVlvPer[ms] * 10^{-6}$$

The desired mass value $m_{Des}[g]$ can be translated into the mass flow request, $mf_{Des}$, using the shortest applicable dosing period $DosVlvPer_{Min}$ (i.e. performing the mass delivery with the shortest possible delay):

$$mf_{Des}[mg/s] = 10^{-6} * m_{Des}[g] / DosVlvPer_{Min}[ms]$$

By using the shortest applicable dosing period, the request to a component driver to actuate the dosing valve is received as soon as possible; this is of particular advantage after the reset. This shortest applicable dosing period is also linked to a variable dosing frequency. A calculated mass flow can be re-calculated to dosing valve opening duty cycle. The duty cycle, in turn, sets the time for which the dosing valve is opened. Such re-calculation is, typically, included in fluid supply systems.

This allows an easy but very exact and efficient correction of dosed mass or mass flow of fluid like DEF when operating a fluid supply system.

A processing unit according to the invention, e.g. a control device of a motor vehicle such as an engine control device or an exhaust gas after-treatment control device, is configured, in particular in terms of programming, to perform a method according to the invention.

The implementation of a method according to the invention in the form of a computer program or computer program product with program code for performing all method steps is advantageous, since this causes particularly low costs, especially if an executing processing device is also used for other tasks and is therefore available anyway. Finally, a machine-readable storage medium is provided with a computer program stored on it, as described above. Suitable storage media or data carriers for providing the computer program are, in particular, magnetic, optical and electrical memories, such as hard drives, flash memories, EEPROMs, DVDs, etc. A program can also be downloaded via computer networks (Internet, intranet, etc.). Such a download can be wired or wired or wireless (e.g. via a WLAN network, a 3G, 4G, 5G or 6G connection, etc.).

Further advantages and embodiments of the invention will become apparent from the description and the appended figures.

The invention is shown schematically in the figures on the basis of exemplary embodiments and will be described in the following, with reference to the figures.

Short Description of the Figures

Fig. 1    shows a fluid supply system, which can be operated by a method according to the invention.

Fig. 2    shows a diagram for explaining a method according to the invention in a preferred embodiment.

Detailed Description

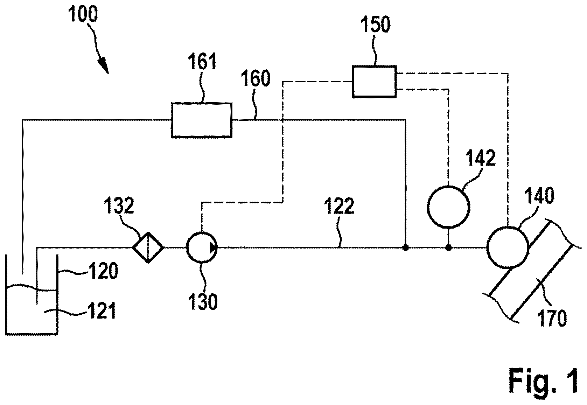

Fig. 1 schematically illustrates a fluid supply system 100, in particular in form of an SCR supply system, which can be operated by a method according to the invention. The SCR supply system 100 comprises a pump 130 with a filter 232. The pump 140 is configured to pump or convey a fluid like reducing agent 121 (e.g., a urea-water solution) from a fluid tank 120 via a pressure line 122 to a dosing module or valve 140. The fluid 121 is then, by means of the dosing valve 140, introduced or sprayed into an exhaust gas system 170 of an internal combustion engine.

Further, a pressure sensor 142 is provided (this can also be integrated in the pump) 130, which is configured to measure a pressure at least in the pressure line 122. A processing unit 150, in the form of an exhaust gas after-treatment control device, for example, is connected to the pressure sensor 142 and receives information about the pressure in the pressure line 122 from said sensor. In addition, the exhaust gas after-treatment control device 150 is connected to the pump 130 and to the dosing valve 140 in order to control or operate the fluid (SCR) supply system 100.

In addition, the SCR supply system 100 includes, for example, a return line 160, through which the fluid can be fed back into the fluid tank 120. In this return line 160, an orifice or throttle 161 is arranged, for example, which offers a local flow resistance. It should be noted, however, that such a return can also be omitted in the case of a pump with actively controlled valves.

The exhaust gas after-treatment control device is configured to use relevant data, such as data received from an engine control unit (ECU) or from sensors for temperature, pressure and nitrogen oxide content in the exhaust gas, to operate the fluid (SCR) supply system 100 and, in particular, pump 130 and dosing valve 140, in order to supply the urea-water solution (fluid) 121 into the exhaust gas system 170 in front of an SCR catalytic converter.

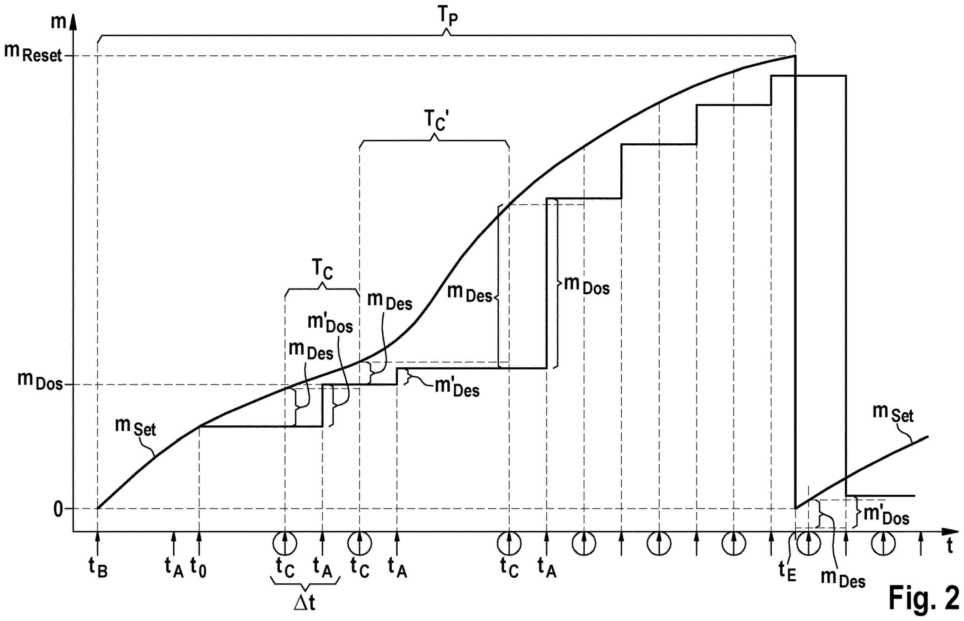

Fig. 2 shows a diagram for illustrating a method according to the invention in a preferred embodiment, i.e., operating a fluid (SCR) supply system like that of Fig. 1. The diagram shows a mass m of fluid (to be) dosed into the exhaust gas system over time t. A dosing period $T_P$ shall start at $t_B$ and last until $t_E$; then, a new dosing period starts. The set mass value $m_{Set}$ (a line) corresponds to an accumulated required mass of said fluid 121 during the current dosing period. For example, the currently required mass of fluid to be dosed in the exhaust gas system depends on the current exhaust gas mass, which in turn depends on the engine operation. Accordingly, the accumulated required mass, i.e., the set mass value $m_{Set}$, can have different slope. It is to be noted that the accumulated mass of fluid introduced into the exhaust gas system is of particular relevance, rather than the exact timing.

In the example shown, the dosing period $T_P$ shall be a first one after start of the engine; at time $t_0$, the entire SCR system (including the SCR catalyst) shall be ready for fluid to be dosed into the exhaust gas system, while the dosing valve can be ready for actuation (at $t_A$) before. In case some dosing request are present before t0, these can be accumulated and applied with the first dosing actuation.

As mentioned above, each dosing period comprises a plurality of dosing cycles, one of them is denoted $T_C$. By means of example, such dosing cycle $T_C$ is defined as ranging from a time tc (indicated with arrows in a circle) to a time tc of a next dosing cycle. At time tc a desired mass value $m_{Des}$ is determined or calculated, and then set. After a delay of $\Delta t$ (a feed forward control delay), the fluid supply system is operated; this includes actuating the pump and (after a short delay) actuating the dosing valve (this short delay is not shown in Fig. 2).

These operating steps are performed according to the desired mass value $m_{Des}$, i.e., a period during which the dosing valve is opened is determined based on the desired mass value $m_{Des}$. Due to different influences in the system like pressure deviations and so on, the actual value $m'_{Dos}$ of fluid dosed into said exhaust gas system during the current dosing cycle $T_C$ can differ from the actually required or desired mass value $m_{Des}$.

In order to compensate for such deviations, the desired mass value $m_{Des}$ for the following dosing cycle $T'_C$ is determined according to:

$$m_{Des} = m_{Set} - m_{Dos}$$

wherein $m_{Set}$ is the set mass value of the accumulated required mass during dosing period $T_P$ (which is then the current dosing period), and wherein $m_{Dos}$ is the dosed mass value of the accumulated mass having been dosed into said exhaust gas system during the current dosing period $T_P$ up to and including (i.e., to the end of) the dosing cycle $T_C$ (which is then the previous dosing cycle). In this way, the deviation between a desired and an actually dosed mass of fluid is compensated for in the next dosing cycle.

The dosed mass value $m_{Dos}$ of the accumulated mass can then be updated by adding the actual value $m'_{Dos}$ of fluid dosed into said exhaust gas system during the current dosing cycle to the previous value $m_{Dos}$ (both values are accumulated).

After the set mass value $m_{Set}$ has reached a reset mass value $m_{Reset}$, the dosing period $T_P$ ends, at time $t_E$, and a new one starts; the set mass value $m_{Set}$ is, thus, reset to zero. In this case, the desired mass value $m_{Des}$ in the first dosing cycle of the new dosing period (it is the first desired mass value $m_{Des}$ shown in Fig. 2 after time $t_E$) is determined or calculated according to:

$$m_{Des} = m_{Set} - (m_{Dos} - m_{Reset})$$

In this way, the correct value is calculate for the desired mass value. By using dosing periods of a certain length and/or maximum fluid mass, the figures to be handled with (in calculations) can be limited. To sum up, the proposed method allows very precise dosing in that deviations between desired and actually dosed mass values are considered; this is achieved by using integrated or accumulation mass values.

**Claims**

1.  A method for operating a fluid supply system (100), said fluid supply system (100) comprising a fluid tank (120), pumping means (130) and a fluid dosing valve (140) for dosing a fluid (121) into an exhaust gas system (170) of an engine, said method comprising operating said fluid supply system (100) by a plurality of dosing cycles (Tc, T'C) within a pre-determined dosing period (TP), wherein each dosing cycle comprises:

determining a desired mass value ($m$Des) of a mass of a fluid (121) to be dosed into the exhaust gas system (170) of the engine, wherein said desired mass value ($m$Des) is determined based on a set mass value ($m$Set) of an accumulated required mass of said fluid (121) during a current dosing period (TP), and on a dosed mass value ($m$Dos) of an accumulated mass of said fluid (121) having been dosed into said exhaust gas system (170) during said cur-rent dosing period (TP) up to and including the previous dosing cycle (Tc),

operating said fluid supply system (100) in order to pump said fluid (121) from said fluid tank (120) to said fluid dosing valve (140) and to dose said fluid (121), via said fluid dosing valve (140), into said exhaust gas system (170), and updating said dosed mass value ($m$Dos) by accumulating a mass of fluid ($m$'Dos) dosed into the exhaust gas system in the current dosing cycle (T'C) and the dosed mass value ($m$Dos) of said accumulated mass of said fluid (121) having been dosed into said exhaust gas system (170) during said cur-rent dosing period (TP) up to and including said previous dosing cycle (Tc)

further comprising operating said fluid supply system (100) by a plurality of consecutive ones of said predetermined dosing periods (Tp)

wherein, for a first dosing cycle of a current dosing period, said desired mass value ($m$Des) is determined based on a set mass value ($m$Set) of an accumulated required mass of said fluid during said current dosing period, on a dosed mass value ($m$Dos) of an accumulated mass of said fluid (121) having been dosed into said exhaust gas system (170) during a previous dosing period up to and including a last dosing cycle of said previous dosing period, and on a reset mass value ($m$Reset) defining said dosing periods.

2.   The method of claim 1, wherein said reset mass value ($m$Reset) is subtracted from said dosed mass value ($m$Dos) of an accumulated mass of said fluid (121) having been dosed into said exhaust gas system (170) during said previous dosing period.

3.   The method of any one of the preceding claims, wherein a mass of fluid dosed into the exhaust gas system (170) in a current dosing cycle is determined based on a mass flow of fluid through the dosing valve and an opening period of said dosing valve.

4.   The method of any one of the preceding claims, wherein said desired mass value is set to zero, if said desired mass value ($m$Des) is determined to be negative.

5.   The method of any one of the preceding claims, wherein operating said fluid supply system (100) within a dosing cycle comprises: starting actuation of said pump prior to starting actuation of said dosing valve.

6.   The method of any one of the preceding claims, wherein said fluid supply system (100) comprises or is a SCR fluid supply system, and wherein said fluid (121) comprises or is a urea-water solution.

7.   A processing unit (150), configured to perform all method steps of the method of any one of the preceding claims.

8.   A computer program, which causes a processing unit (150) to perform all method steps of the method of any one of claims 1 to 6, when executed on the processing unit (150).

9.   A machine-readable storage medium with the computer program of claim 8 stored thereon.


**Patentansprüche**

1.   Verfahren zum Betrieb eines Fluidversorgungssystems (100), wobei das Fluidversorgungssystem (100) einen Fluidtank (120), eine Pumpeinrichtung (130) und ein Fluiddosierventil (140) zum Dosieren eines Fluids (121) in ein Abgassystem (170) eines Motors umfasst, wobei das Verfahren den Betrieb des Fluidversorgungssystems (100) durch eine Vielzahl von Dosierzyklen (Tc, T'C) innerhalb eines vorbestimmten Dosierzeitraums (TP) umfasst, wobei jeder Dosierzyklus umfasst:

Bestimmen eines gewünschten Massenwerts ($m$Des) einer Masse eines Fluids (121), das in das Abgassystem (170) des Motors dosiert werden soll, wobei der gewünschte Massenwert ($m$Des) basierend auf einem eingestellten Massenwert ($m$Set) einer kumulierten erforderlichen Masse des Fluids (121) während eines aktuellen Dosierzeitraums (TP) und auf einem dosierten Massenwert (*m*Dos) einer kumulierten Masse des Fluids (121) bestimmt wird, die in das Abgassystem (170) während des aktuellen Dosierzeitraums (TP) bis zu und einschließlich des vorherigen Dosierzyklus (Tc) dosiert wurde, Betreiben des Fluidversorgungssystems (100), um das Fluid (121) aus dem Fluidtank (120) zu dem Fluiddosierventil (140) zu pumpen und das Fluid (121) über das Fluiddosierventil (140) in das Abgassystem (170) zu dosieren, und

Aktualisieren des dosierten Massenwerts (*m*Dos) durch Kumulieren einer Masse des Fluids (m'Dos), das im aktuellen Dosierzyklus (T'C) in das Abgassystem dosiert wurde, und des dosierten Massenwerts (*m*Dos) der kumulierten Masse des Fluids (121), das während des aktuellen Dosierzeitraums (TP) bis zu und einschließlich des vorherigen Dosierzyklus (Tc) in das Abgassystem (170) dosiert wurde,

ferner umfassend das Betreiben des Fluidversorgungssystems (100) durch eine Vielzahl von aufeinanderfolgenden der vorbestimmten Dosierzeiträume (Tp)

wobei für einen ersten Dosierzyklus eines aktuellen Dosierzeitraums der gewünschte Massenwert (*m*Des) basierend auf einem eingestellten Massenwert (*m*Set) einer kumulierten erforderlichen Masse des Fluids während des aktuellen Dosierzeitraums, auf einem dosierten Massenwert (*m*Dos) einer kumulierten Masse des Fluids (121), das in das Abgassystem (170) während eines vorherigen Dosierzeitraums bis zu und einschließlich eines letzten Dosierzyklus des vorherigen Dosierzeitraums dosiert wurde, und auf einem Rücksetzmassenwert (*m*Reset), der die Dosierzeiträume definiert, bestimmt wird.

2. Verfahren nach Anspruch 1, wobei der Rücksetzmassenwert (*m*Reset) von dem dosierten Massenwert (*m*Dos) einer kumulierten Masse des Fluids (121) subtrahiert wird, das während des vorhergehenden Dosierzeitraums in das Abgassystem (170) dosiert wurde.

3. Verfahren nach einem der vorhergehenden Ansprüche, wobei eine Masse des in das Abgassystem (170) dosierten Fluids in einem aktuellen Dosierzyklus basierend auf einem Massenstrom des Fluids durch das Dosierventil und einer Öffnungsdauer des Dosierventils bestimmt wird.

4. Verfahren nach einem der vorhergehenden Ansprüche, wobei der gewünschte Massenwert auf null gesetzt wird, wenn der gewünschte Massenwert (*m*Des) als negativ bestimmt wird.

5. Verfahren nach einem der vorhergehenden Ansprüche, wobei der Betrieb des Fluidversorgungssystems (100) innerhalb eines Dosierzyklus umfasst: Starten der Betätigung der Pumpe vor dem Starten der Betätigung des Dosierventils.

6. Verfahren nach einem der vorhergehenden Ansprüche, wobei das Fluidversorgungssystem (100) ein SCR-Fluidversorgungssystem umfasst oder ein solches ist, und wobei das Fluid (121) eine Harnstoff-Wasser-Lösung umfasst oder eine solche ist.

7. Verarbeitungseinheit (150), die dazu ausgelegt ist, alle Verfahrensschritte des Verfahrens nach einem der vorhergehenden Ansprüche durchzuführen.

8. Computerprogramm, das eine Verarbeitungseinheit (150) veranlasst, alle Verfahrensschritte des Verfahrens nach einem der Ansprüche 1 bis 6 durchzuführen, wenn es auf der Verarbeitungseinheit (150) ausgeführt wird.

9. Maschinenlesbares Speichermedium mit dem darin gespeicherten Computerprogramm nach Anspruch 8.

**Revendications**

1. Procédé de fonctionnement d'un système d'alimentation en fluide (100), ledit système d'alimentation en fluide (100) comprenant un réservoir de fluide (120), des moyens de pompage (130) et une vanne de dosage de fluide (140) pour le dosage d'un fluide (121) dans un système de gaz d'échappement (170) d'un moteur, ledit procédé comprenant la mise en fonctionnement dudit système d'alimentation en fluide (100) par le biais d'une pluralité de cycles de dosage (Tc, T'C) dans les limites d'une période de dosage prédéterminée (TP), dans lequel chaque cycle de dosage comprend :

la détermination d'une valeur de masse souhaitée (*m*Des) d'une masse d'un fluide (121) devant être dosé dans le système de gaz d'échappement (170) du moteur, dans lequel ladite valeur de masse souhaitée (*m*Des) est déterminée sur la base d'une valeur de masse réglée (*m*Set) d'une masse nécessaire accumulée dudit fluide (121) durant une période de dosage actuelle (TP), et d'une valeur de masse dosée ($m$Dos) d'une masse accumulée dudit fluide (121) ayant été dosé dans ledit système de gaz d'échappement (170) durant ladite période de dosage actuelle (TP) jusqu'au cycle de dosage précédent (Tc) et incluant celui-ci,

la mise en fonctionnement dudit système d'alimentation en fluide (100) afin de pomper ledit fluide (121) depuis ledit réservoir de fluide (120) jusqu'à ladite vanne de dosage de fluide (140) et de doser ledit fluide (121), par l'intermédiaire de ladite vanne de dosage de fluide (140), dans ledit système de gaz d'échappement (170), et

la mise à jour de ladite valeur de masse dosée ($m$Dos) en accumulant une masse de fluide ($m$'Dos) dosé dans le système de gaz d'échappement dans le cycle de dosage actuel (T'C) et la valeur de masse dosée ($m$Dos) de ladite masse accumulée dudit fluide (121) ayant été dosé dans ledit système de gaz d'échappement (170) durant ladite période de dosage actuelle (TP) jusqu'audit cycle de dosage précédent (Tc) et incluant celui-ci,

comprenant en outre la mise en fonctionnement dudit système d'alimentation en fluide (100) par le biais d'une pluralité de périodes consécutives desdites périodes de dosage prédéterminées (Tp),

dans lequel, pour un premier cycle de dosage d'une période de dosage actuelle, ladite valeur de masse souhaitée ($m$Des) est déterminée sur la base d'une valeur de masse réglée ($m$Set) d'une masse nécessaire accumulée dudit fluide durant ladite période de dosage actuelle, d'une valeur de masse dosée ($m$Dos) d'une masse accumulée dudit fluide (121) ayant été dosé dans ledit système de gaz d'échappement (170) durant une période de dosage précédente jusqu'à un dernier cycle de dosage, et incluant celui-ci, de ladite période de dosage précédente, et d'une valeur de masse reré-glée ($m$Reset) définissant lesdites périodes de dosage.

2. Procédé de la revendication 1, dans lequel ladite valeur de masse reré-glée ($m$Reset) est soustraite de ladite valeur de masse dosée ($m$Dos) d'une masse accumulée dudit fluide (121) ayant été dosé dans ledit système de gaz d'échappement (170) durant ladite période de dosage précédente.

3. Procédé de l'une quelconque des revendications précédentes, dans lequel une masse de fluide dosé dans le système de gaz d'échappement (170) dans un cycle de dosage actuel est déterminée sur la base d'un débit-masse de fluide à travers la vanne de dosage et d'une période d'ouverture de ladite vanne de dosage.

4. Procédé de l'une quelconque des revendications précédentes, dans lequel ladite valeur de masse souhaitée est réglée à zéro, s'il est déterminé que ladite valeur de masse souhaitée ($m$Des) est négative.

5. Procédé de l'une quelconque des revendications précédentes, dans lequel la mise en fonctionnement dudit système d'alimentation en fluide (100) dans les limites d'un cycle de dosage comprend : le démarrage de l'actionnement de ladite pompe avant le démarrage de l'actionnement de ladite vanne de dosage.

6. Procédé de l'une quelconque des revendications précédentes, dans lequel ledit système d'alimentation en fluide (100) comprend ou est un système d'alimentation en fluide SCR, et dans lequel ledit fluide (121) comprend ou est une solution urée-eau.

7. Unité de traitement (150), configurée pour réaliser toutes les étapes de procédé du procédé de l'une quelconque des revendications précédentes.

8. Programme d'ordinateur, qui amène une unité de traitement (150) à réaliser toutes les étapes de procédé du procédé de l'une quelconque des revendications 1 à 6, lorsqu'il est exécuté sur l'unité de traitement (150).

9. Support de stockage lisible par machine, avec le programme d'ordinateur de la revendication 8 stocké sur celui-ci.

EP 4 123 133 B1

Fig. 1

9

Fig. 2

EP 4 123 133 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2860368 A1